# EUROPEAN PATENT APPLICATION

(11) **EP 4 350 524 A1**
(43) Date of publication of application: **10.04.2024**
(21) Application number: 22819469.2
(22) Date of filing: 06.06.2022
(51) Int. Cl.: G06F 11/36

(54) **ERROR DETECTION METHOD AND DEVICE RELATED THERETO**

(30) Priority: 11.06.2021 CN 202110657038
(71) Applicant: Huawei Technologies Co., Ltd., Longgang Shenzhen, Guangdong 518129 (CN)
(72) Inventor: CAO, Jianlong, Shenzhen, Guangdong 518129 (CN); FANG, Rui, Shenzhen, Guangdong 518129 (CN); CHEN, Zhaodi, Shenzhen, Guangdong 518129 (CN)
(74) Representative: Huawei European IPR
(86) International application number: PCT/CN2022/097095
(87) International publication number: WO 2022/257871

(57) **Abstract**

This application discloses a fault detection method, and relates to the field of computer technologies. The fault detection method includes: obtaining a first scheduling table of a first task, where the first scheduling table includes a first test pattern, the first test pattern is used to detect a fault of a target logic circuit, the target logic circuit is a logic circuit configured to execute the first task, and the first task is executed in a target fault detection time interval FDTI; detecting whether the first test pattern has been executed in the target FDTI; and if it is detected that the first test pattern has not been executed in the target FDTI, executing the first test pattern in the target FDTI based on the first scheduling table. This application ensures that a same test pattern is executed only once in the FDTI, and is not repeatedly executed. This reduces load of a test pattern in an STL on a processor, reduces time spent by the processor in detecting a fault, and improves operating efficiency of the processor.

## Description

This application claims priority to Chinese Patent Application No. 202110657038.6, filed with the China National Intellectual Property Administration on June 11, 2021 and entitled "FAULT DETECTION METHOD AND RELATED APPARATUS", which is incorporated herein by reference in its entirety.

### TECHNICAL FIELD

This application relates to the field of computer technologies, and in particular, to a fault detection method and a related apparatus.

### BACKGROUND

In the computer field, a random hardware fault may occur in a data processing apparatus, for example, a permanent fault caused by a short circuit or an open circuit in an integrated circuit, or a temporary fault such as bit flipping caused by exposure to natural radiation or particle impact.

In some application fields with a high safety requirement, for example, the vehicle field in which safety is vital, to ensure functional safety, a fault detection mechanism may be provided for a processor to detect a hardware fault and ensure that a safety operation is performed when the hardware fault occurs.

Currently, in prior art, a processor periodically executes test patterns (test pattern) in a software test library (Software Test Library, STL) to detect a fault of a logic circuit. However, the STL includes a large quantity of test patterns, periodically executing the test patterns in the STL by the processor results in a heavy load on the processor, that is, the processor needs to spend a long time in fault detection, thereby affecting operating efficiency of the processor.

### SUMMARY

A first aspect of this application provides a fault detection method, applied to a terminal in the field of safety requirements, for example, a vehicle-mounted terminal or a control terminal in aerospace.

The method includes: obtaining a first scheduling table of a first task, where the first scheduling table includes a first test pattern, the first test pattern is used to detect a fault of a target logic circuit, the target logic circuit is a logic circuit configured to execute the first task, and the first task is executed in a target fault detection time interval FDTI.

The first task may be a task that needs to be run in the target FDTI in the terminal, for example, may be a process or a thread that needs to be run in the target FDTI in the terminal. A manner in which the terminal determines the first task may be obtaining the first task from a task queue. A task in the task queue is a task that is to be executed and is not executed (or is referred to as a task in a ready state). The terminal may determine the first task by obtaining an identifier (identifier, ID) of the first task, or determine the first task based on a data structure corresponding to the first task. The scheduling table corresponding to the first task may include at least one test pattern (for example, including the first test pattern and a second test pattern mentioned in embodiments of this application). The at least one test pattern corresponds to a machine instruction code of the first task, and the at least one test pattern is used to detect the fault of the target logic circuit. That the at least one test pattern corresponds to the machine instruction code of the first task means that fault detection of the target logic circuit on which execution of the machine instruction code of the first task depends can be implemented based on the at least one test pattern.

The method further includes: detecting whether the first test pattern has been executed in the target FDTI; and if it is detected that the first test pattern has not been executed in the target FDTI, executing the first test pattern in the target FDTI based on the first scheduling table, to detect the fault of the target logic circuit.

Test pattern sets corresponding to different tasks in a same FDTI may overlap (that is, a union set of the two sets is not empty). In order to avoid repeated execution of a test pattern in an FDTI period, an executed test pattern in the FDTI is analyzed, and a proper scheduling set is generated. Before the test pattern included in the first scheduling table is executed, whether the test pattern included in the first scheduling table has been executed in a current FDTI period needs to be detected. If the test pattern has been executed, execution of the test pattern may be directly skipped, or if the test pattern has not been executed, the test pattern may be executed.

In this application, the first test pattern is executed only when the first test pattern needs to be executed for the first time in the target FDTI. However, when the first test pattern has been executed in the target FDTI, the first test pattern is not executed in the target FDTI again, so that a same test pattern is executed only once in the FDTI, and is not repeatedly executed. This reduces load of a test pattern in an STL on a processor, reduces time spent by the processor in detecting a fault, and improves operating efficiency of the processor.

In some possible implementations, after the executing the first test pattern in the target FDTI, the method further includes: obtaining a second scheduling table of a second task, where the second scheduling table includes the first test pattern, the target logic circuit is a logic circuit used to execute the second task, and the second task is executed in the target fault detection time interval FDTI; and skipping execution of the first test pattern in the target FDTI based on the fact that the first test pattern has been executed in the target FDTI.

When the first test pattern needs to be executed in the target FDTI for the first time, the first test pattern may be executed, and the second task (the second task is different from the first task) further needs to be executed in the FDTI. In this case, the second scheduling table of the second task may be obtained, where the second scheduling table also includes the first test pattern. During task scheduling, execution of the first test pattern may be skipped in the target FDTI based on the fact that the first test pattern has been executed in the target FDTI. In this way, the first test pattern is executed only once in the FDTI, and is not repeatedly executed.

In some possible implementations, the detecting whether the first test pattern has been executed in the target FDTI includes: obtaining a first identifier corresponding to the first test pattern, where the first identifier is used to indicate whether the first test pattern has been executed in the target FDTI.

The first identifier may be represented by a bit mask (for example, the bit mask may be STLMask). For example, when the bit STLMask corresponding to the first test pattern in the mask is 1, it indicates that the first test pattern is already executed in the current FDTI period; and when the bit STLMask corresponding to the first test pattern in the mask is 0, it indicates that the first test pattern is not executed in the current FDTI period. When initialization for the FDTI is performed, the first identifier STLMask is set to 0, and a timer is enabled. A period of the timer is the FDTI. Each time the timer is triggered, the first identifier is reset to 0, and the timer is reset. For example, before the first task is executed, it may be determined, based on detecting that the first identifier STLMask corresponding to the first test pattern is 0, that the first test pattern has not been executed in the target FDTI.

In some possible implementations, the detecting that the first test pattern has not been executed in the target FDTI includes: detecting that the first identifier corresponding to the first test pattern indicates that the first test pattern has not been executed in the target FDTI; and after the executing the first test pattern in the target FDTI, the method further includes: modifying the first identifier, so that the first identifier indicates that the first test pattern has been executed in the target FDTI.

In some possible implementations, after the detecting that the first test pattern has not been executed in the target FDTI, the method further includes: obtaining a second identifier corresponding to the first test pattern, where the second identifier is used to indicate whether the first test pattern needs to be executed; and before the executing the first test pattern in the target FDTI, the method further includes: detecting that the second identifier indicates that the first test pattern needs to be executed.

The second identifier may be used to indicate whether the first test pattern needs to be executed. The first test pattern is executed in the target FDTI only when the second identifier indicates that the first test pattern needs to be executed. The second identifier is associated with the first identifier. The second identifier indicates that the first test pattern needs to be executed only when the first identifier indicates that the first test pattern has not been executed in the target FDTI. The first identifier indicates that the first test pattern has been executed in the target FDTI, the second identifier indicates that the first test pattern does not need to be executed.

In some possible implementations, after the executing the first test pattern in the target FDTI, the method further includes: modifying the second identifier, so that the second identifier indicates that the first test pattern does not need to be executed.

In some possible implementations, a target task includes a process or a thread.

A second aspect of this application provides a terminal. The terminal includes a processing unit and an obtaining unit. The obtaining unit is configured to obtain a first scheduling table of a first task, where the first scheduling table includes a first test pattern, the first test pattern is used to detect a fault of a target logic circuit, the target logic circuit is a logic circuit used to execute the first task, and the first task is executed in a target fault detection time interval FDTI. The processing unit is configured to detect whether the first test pattern has been executed in the target FDTI; and
if it is detected that the first test pattern has not been executed in the target FDTI, execute the first test pattern in the target FDTI to detect the fault of the target logic circuit.

In some possible implementations, the processing unit is further configured to: if it is detected that the first test pattern has been executed in the target FDTI, skip execution of the first test pattern in the target FDTI.

In some possible implementations, the obtaining unit is further configured to obtain a second scheduling table of a second task after the first test pattern is executed in the target FDTI, where the second scheduling table includes the first test pattern, the target logic circuit is a logic circuit configured to execute the second task, and the second task is executed in the target fault detection time interval FDTI.

The processing unit is further configured to skip execution of the first test pattern in the target FDTI when the first test pattern has been executed in the target FDTI.

In some possible implementations, the obtaining unit is further configured to obtain a first identifier corresponding to the first test pattern, where the first identifier is used to indicate whether the first test pattern has been executed in the target FDTI.

In some possible implementations, the processing unit is further configured to detect that the first identifier corresponding to the first test pattern indicates that the first test pattern has not been executed in the target FDTI; and
modify the first identifier after the first test pattern is executed in the target FDTI, so that the first identifier indicates that the first test pattern has been executed in the target FDTI.

In some possible implementations, the processing unit is further configured to: obtain a second identifier corresponding to the first test pattern after it is detected that the first test pattern has not been executed in the target FDTI, where the second identifier is used to indicate whether the first test pattern needs to be executed; and
before the first test pattern is executed in the target FDTI, detect that the second identifier indicates that the first test pattern needs to be executed.

In some possible implementations, the processing unit is further configured to modify the second identifier after the first test pattern is executed in the target FDTI, so that the second identifier indicates that the first test pattern does not need to be executed.

In some possible implementations, a target task includes a process or a thread.

In embodiments of this application, the first test pattern is executed only when the first test pattern needs to be executed for the first time in the target FDTI. However, when the first test pattern has been executed in the target FDTI, the first test pattern is not executed in the target FDTI again, so that a same test pattern is executed only once in the FDTI, and is not repeatedly executed. This reduces load of a test pattern in an STL on a processor, reduces time spent by the processor in detecting a fault, and improves operating efficiency of the processor.

A third aspect of this application provides a terminal, where the terminal includes a processor, and the processor is configured to:
obtain a first scheduling table of a first task, where the first scheduling table includes a first test pattern, the first test pattern is used to detect a fault of a target logic circuit, the target logic circuit is a logic circuit configured to execute the first task, and the first task is executed in a target fault detection time interval FDTI;
detect whether the first test pattern has been executed in the target FDTI; and
if it is detected that the first test pattern has not been executed in the target FDTI, execute the first test pattern in the target FDTI to detect the fault of the target logic circuit.

In a possible implementation, the processor is further configured to:
if it is detected that the first test pattern has been executed in the target FDTI, skip execution of the first test pattern in the target FDTI.

In a possible implementation, the processor is further configured to:
obtain a second scheduling table of a second task after the first test pattern is executed in the target FDTI, where the second scheduling table includes the first test pattern, the target logic circuit is a logic circuit configured to execute the second task, and the second task is executed in the target fault detection time interval FDTI; and
skip execution of the first test pattern in the target FDTI based on the fact that the first test pattern has been executed in the target FDTI.

In a possible implementation, the processor is specifically configured to:
obtain a first identifier corresponding to the first test pattern, where the first identifier is used to indicate whether the first test pattern has been executed in the target FDTI.

In a possible implementation, the processor is specifically configured to:
detect that the first identifier corresponding to the first test pattern indicates that the first test pattern has not been executed in the target FDTI; and
modify the first identifier after the first test pattern is executed in the target FDTI, so that the first identifier indicates that the first test pattern has been executed in the target FDTI.

In a possible implementation, the processor is further configured to:
obtain a second identifier corresponding to the first test pattern after it is detected that the first test pattern has not been executed in the target FDTI, where the second identifier is used to indicate whether the first test pattern needs to be executed; and
before the first test pattern is executed in the target FDTI, detect that the second identifier indicates that the first test pattern needs to be executed.

In a possible implementation, the processor is further configured to:
modify the second identifier after the first test pattern is executed in the target FDTI, so that the second identifier indicates that the first test pattern does not need to be executed.

In some possible implementations, a target task includes a process or a thread.

A fourth aspect of this application provides a computer-readable storage medium. The computer-readable storage medium stores a computer program. When the computer program is run on a computer, the computer is enabled to perform the method according to any implementation of the first aspect.

A fifth aspect of this application provides a computer program product. When the computer program product is run on a computer, the computer is enabled to perform the method according to any one of the implementations of the first aspect.

A sixth aspect of this application provides a chip, including one or more processors. Some or all of the processors are configured to read and execute a computer program stored in a memory, to perform the method according to any one of the possible implementations of the foregoing aspects. Optionally, the chip includes the memory, and the memory and the processor are connected to the memory by using a circuit or a wire. Further, optionally, the chip further includes a communication interface, and the processor is connected to the communication interface. The communication interface is configured to receive data or information or both that need to be processed. The processor obtains the data and/or the information from the communication interface, processes the data and/or the information, and outputs a processing result through the communication interface. The communication interface may be an input/output interface. The method provided in embodiments of this application may be implemented by one chip, or may be cooperatively implemented by a plurality of chips.

Embodiments of this application provide a fault detection method, including: obtaining a first scheduling table of a first task, where the first scheduling table includes a first test pattern, the first test pattern is used to detect a fault of a target logic circuit, the target logic circuit is a logic circuit used to execute the first task, and the first task is executed in a target fault detection time interval FDTI; detecting whether the first test pattern has been executed in the target FDTI; and if it is detected that the first test pattern has not been executed in the target FDTI, executing the first test pattern in the target FDTI based on the first scheduling table, to detect the fault of the target logic circuit. The first test pattern is executed only when the first test pattern needs to be executed for the first time in the target FDTI. However, when the first test pattern has been executed in the target FDTI, the first test pattern is not executed in the target FDTI again, so that a same test pattern is executed only once in the FDTI, and is not repeatedly executed. This reduces load of a test pattern in an STL on a processor, reduces time spent by the processor in detecting a fault, and improves operating efficiency of the processor.

### BRIEF DESCRIPTION OF DRAWINGS

FIG. 1a is a schematic diagram of an FDTI and an FHTI according to an embodiment of this application;
FIG. 1b is a schematic diagram of a structure of a terminal according to an embodiment of this application;
FIG. 1c is a schematic diagram of an application architecture according to an embodiment of this application;
FIG. 2 is a schematic flowchart of a fault detection method according to an embodiment of this application;
FIG. 3 is a schematic flowchart of a fault detection method according to an embodiment of this application;
FIG. 4 is a schematic flowchart of a fault detection method according to an embodiment of this application;
FIG. 5 is a schematic flowchart of a fault detection method according to an embodiment of this application;
FIG. 6 is a schematic diagram of a fault detection method according to an embodiment of this application;
FIG. 7 is a schematic flowchart of a fault detection method according to an embodiment of this application;
FIG. 8 is a schematic diagram of a fault detection method according to an embodiment of this application;
FIG. 9 is a schematic diagram of state conversion according to an embodiment of this application; and
FIG. 10 and FIG. 11 are schematic diagrams of structures of a terminal according to embodiments of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, as long as same or similar technical effects can be achieved.

In the computer field, a random hardware fault may occur in a data processing apparatus, for example, a permanent fault caused by a short circuit or an open circuit in an integrated circuit, or a temporary fault such as bit flipping caused by exposure to natural radiation or a particle collision.

With wide application of the data processing apparatus in a large quantity of fields, to avoid a loss caused by a hardware fault that occurs in the data processing apparatus, a concept of "functional safety " is proposed. The functional safety means that there is no unacceptable risk caused by an electronic system fault. An ultimate goal of the functional safety is to prevent personal injury or huge property loss caused by the electronic system fault.

In a field that has a high safety requirement, for example, aerospace, transportation, and medical care, a corresponding safety mechanism is provided to meet a functional safety requirement. These safety mechanisms need to ensure that a system is in a secure state after a fault is detected to prevent harm. For example, in the field of automobiles, a typical safety risk is usually caused by a fault in an electronic control unit of an anti-lock system or a power steering system. When a fault occurs in the electronic control unit of the anti-lock system or the power steering system, a fatal collision may occur in a vehicle. To ensure that the system is secure and prevent a safety risk, a fault that has occurred needs to be detected and handled in a timely manner.

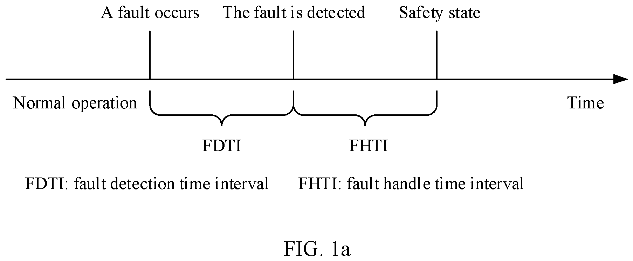

Generally speaking, when a fault occurs in the system, the safety mechanism needs to detect the fault and handle the fault in time to ensure that the system can reach a secure state before a danger occurs. Usually, an interval from time when a fault occurs to time when the fault is detected is referred to as a fault detection time interval (Fault Detection Time Interval, FDTI), and an interval from the time when the fault is detected to time when the system enters the secure state is referred to as a fault handle time interval (Fault Handle Time Interval, FHTI). For example, FIG. 1a is a schematic diagram of an FDTI and an FHTI according to an embodiment of this application. To avoid danger, a system needs to reach a secure state in a specific period after a fault occurs in the system. That is, a sum of the FDTI and the FHTI needs to be less than or equal to a time threshold. Therefore, in order to ensure that the FHTI is long enough to process a fault, to ensure that the fault can be processed smoothly, it is important to shorten the FDTI as much as possible.

At present, a method for implementing fault detection in a related technology is dual-core lockstep (Dual-core Lockstep, DCLS). An implementation of the DCLS is shown as follows: Two processors run a same program, and input output results of the two processors into a comparison logic to compare whether the output results of the two processors are the same. If the output results of the two processors are the same, it may be determined that no fault occurs; or if the output results of the two processors are different, it may be determined that a fault occurs in the processors. Although this fault detection manner can effectively detect a fault, two processors need to be used to run a same program, which has disadvantages of high costs and poor flexibility.

Therefore, another software-based fault detection method is provided in the prior art: software-based built-in self-test (software-based built-in self-test, SBIST). In the fault detection method, a processor periodically executes a test pattern in an STL to detect a fault in a logic circuit. Compared with the DCLS, the fault detection method has lower costs and higher flexibility. However, because the system usually has many logic circuits, in order to implement fault detection of all logic circuits, the STL usually includes numerous test patterns. Therefore, that the processor periodically executes, the test patterns in the STL causes pretty high load of the processor, that is, the processor needs to spend more time in detecting a fault, thereby affecting operating efficiency of the processor.

In view of this, in a process of performing fault detection, a terminal may determine a scheduling table corresponding to a currently running task, to execute a test pattern included in the scheduling table. Because the scheduling table includes only a test pattern corresponding to a machine instruction code of the task, the terminal detects a fault based on the scheduling table, so that execution of all test patterns in the software test library can be avoided. This reduces load of the processor and effectively improves operating efficiency of the processor.

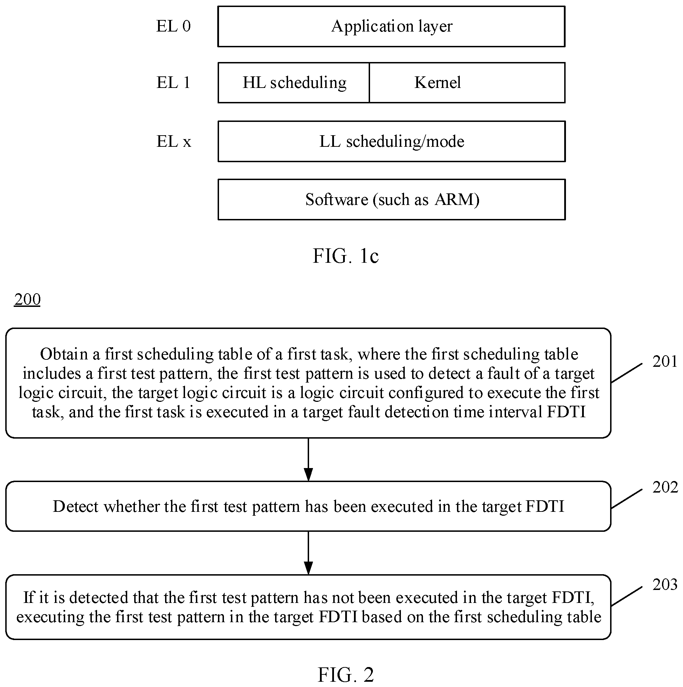

As shown in FIG. 1c, the SBIST scheduling may be divided into two parts: low level (LL) scheduling and high level (HL) scheduling. The LL scheduling is mainly used to save and restore a context of test pattern switching in the STL and invoke a specific test pattern. The HL scheduling uses the SBIST as a task scheduling. The full STL takes a long time, which greatly affects real-time performance of the system. The HL schedule can be introduced to a kernel mode to increase scheduling flexibility. This is more friendly to a real-time system and is also recommended.

However, in an existing implementation, an HL scheduler obtains running time and period of the STL at a coarse granularity, and is less aware of information about the test pattern in the STL, and cannot implement fine-grained control. In one FDTI, there may be a plurality of tasks that need to be executed, and in the FDTI, a test pattern corresponding to each of the plurality of tasks that need to be executed needs to be executed. However, test patterns corresponding to different tasks may be repeated, and if the test pattern corresponding to each task that needs to be executed is completely executed in the FDTI, a plurality of repeated test patterns may be executed. In one FDTI, a same test pattern needs to be executed only once to ensure system safety. Therefore, the foregoing SBIST scheduling manner causes long SBIST task blocking time, and further causes heavy load of the processor. That is, the processor needs to spend more time to detect a fault, thereby affecting operating efficiency of the processor.

The terminal in embodiments of this application may be a data processing device in a field having a safety requirement. Currently, for example, the terminal may be: a vehicle-mounted terminal in transportation, a control terminal in aerospace, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

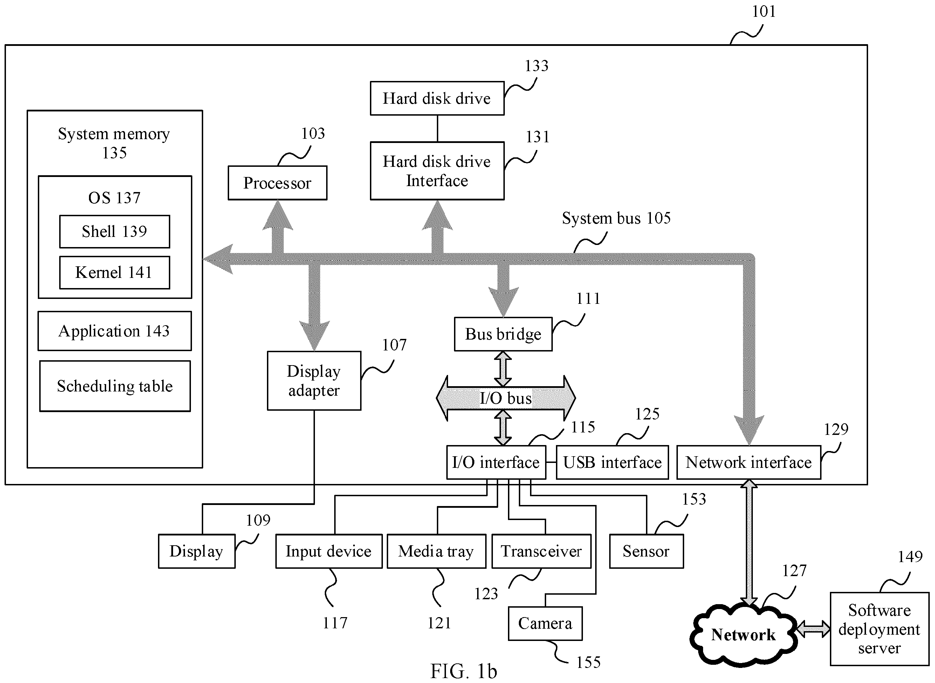

FIG. 1b is a schematic diagram of a structure of a terminal 101 according to an embodiment of this application.

As shown in FIG. 1b, the terminal 101 includes a processor 103, and the processor 103 is coupled to a system bus 105. The processor 103 may be one or more processors. Each processor may include one or more processor cores. A video adapter (video adapter) 107 is further included, and the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, for example, an input device 117 (such as a touchscreen), a multimedia disk (media tray) 121 (such as a compact disc read-only memory (compact disc read-only memory, CD-ROM), and a multimedia interface). A transceiver 123 (which can send and/or receive a radio communication signal), a camera 155 (which can capture static and dynamic digital video images), and an external USB interface 125 are further included. Optionally, an interface connected to the I/O interface 115 may be a USB interface.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus such as an ASIC.

The terminal 101 may communicate with a software deployment server 149 through a network interface 129. For example, the network interface 129 is a hardware network interface, for example, a network adapter. A network 127 may be an external network such as the internet, or an internal network such as the Ethernet or a virtual private network (virtual private network, VPN). Optionally, the network 127 may alternatively be a wireless network, for example, a Wi-Fi network or a cellular network.

A hard disk drive interface 131 is coupled to the system bus 105. A hardware drive interface is connected to the hard disk drive 133. A system memory 135 is coupled to the system bus 105. Data running in the system memory 135 may include an operating system (OS) 137, an application 143, and a scheduling table of the terminal 101.

The operating system includes a shell 139 and a kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes components of the operating system that are configured to manage a memory, a file, a peripheral, and a system resource. The kernel 141 directly interacts with hardware, the kernel of the operating system usually runs a process, provides inter-process communication, and provides functions such as CPU time slice management, interrupt, memory management, and I/O management.

For example, when the terminal 101 is a vehicle-mounted terminal, the application 143 includes a program related to vehicle driving control, for example, a program for managing interaction between a self-driving vehicle and an obstacle on a road, a program for controlling a route or a speed of the self-driving vehicle, and a program for controlling interaction between the self-driving vehicle and another self-driving vehicle on the road. In an embodiment, when the application 143 needs to be executed, the terminal 101 may download the application 143 from the software deployment server 149. In an embodiment, when the terminal 101 downloads the application 143 from the software deployment server 149, the terminal 101 may also download, from the software deployment server 149, a scheduling table corresponding to the application 143.

A sensor 153 is associated with the terminal 101. The sensor 153 is configured to detect an environment around the terminal 101. For example, the sensor 153 may detect an animal, an automobile, an obstacle, a crosswalk, and the like. Further, the sensor 153 may also detect an environment around an object such as the foregoing animal, automobile, obstacle, or crosswalk, for example, an environment around an animal, for example, another animal that appears around the animal, weather conditions, or brightness of a surrounding environment. Optionally, if the terminal 101 is located in a self-driving vehicle, the sensor may be a radar system or the like.

The foregoing describes an application scenario of the fault detection method provided in embodiments of this application. The following describes in detail an execution process of the fault detection method.

FIG. 2 is a schematic flowchart of a fault detection method 200 according to an embodiment of this application. As shown in FIG. 2, the fault detection method 200 includes the following steps.

Step 201: Obtain a first scheduling table of a first task, where the first scheduling table includes a first test pattern, the first test pattern is used to detect a fault of a target logic circuit, the target logic circuit is a logic circuit configured to execute the first task, and the first task is executed in a target fault detection time interval FDTI.

In this embodiment, in a normal running process of a terminal, the terminal may periodically execute the fault detection method 200, for example, execute the fault detection method 200 every 30 milliseconds or 50 milliseconds, to ensure that a fault that has occurred can be detected in time.

In a possible embodiment, the first task may be a task that needs to be run in the target FDTI in the terminal, for example, may be a process or a thread that needs to be run in the target FDTI in the terminal. A manner of determining the first task by the terminal may be obtaining the first task from a task queue. A task in the task queue is a task that is to be executed and has not been executed (or is referred to as a task in a ready state). The terminal may determine the first task by obtaining an identifier (identifier, ID) of the first task, or determine the first task based on a data structure corresponding to the first task, for example, determine, based on a thread ID, a specific thread to which the first task refers. For example, when the first task is a process, the first task may be, for example, a process such as a vehicle video check process, a vehicle speed calculation process, a radar detection process, a vehicle anti-lock process, or a tire pressure detection process.

In a possible embodiment, in a non-deterministic scheduling scenario, a scheduler does not predict a task that needs to be executed in a next FDTI, but senses in real time a task that needs to be executed in the next FDTI only when entering the FDTI. Therefore, a priority preemption manner is set for an SBIST task. In the FDTI, before each common task (non-SBIST task) is executed, an STL subset (including at least one test pattern) corresponding to the task is executed in an uninterrupted manner. In this scenario, the scheduler may sense, in real time, a task that needs to be executed in the current FDTI, to sense the first task.

In a possible embodiment, in a deterministic scheduling scenario, a scheduler may predict a task that needs to be executed in a next FDTI. To ensure deterministic scheduling, worst case execution time (worst Case execution time, WCET) needs to be statically determined for most tasks, to determine a priority order. Therefore, in this scenario, a default high priority is not suitable for an SBIST task, and a scheduling algorithm needs to be adapted for the SBIST task, to perform deterministic scheduling arrangement. In this scenario, the scheduler may sense, before the current FDTI, a task that needs to be executed in the FDTI, to sense the first task.

In this embodiment, any task that can be run in the terminal may have a corresponding scheduling table. These scheduling tables, for example, may be preset in the terminal, or may be generated by the terminal based on a task-based machine instruction code. Therefore, the terminal may determine, in a plurality of scheduling tables, the first scheduling table corresponding to the first task. For example, when the first task is a process, the terminal may determine, based on a process ID, the first scheduling table corresponding to the first task.

The scheduling table corresponding to the first task may include at least one test pattern (for example, including the first test pattern and a second test pattern mentioned in embodiments of this application), the at least one test pattern corresponds to a machine instruction code of the first task, and the at least one test pattern is used to detect the fault of the target logic circuit. That the at least one test pattern corresponds to the machine instruction code of the first task means that fault detection of the target logic circuit on which execution of the machine instruction code of the first task depends can be implemented based on the at least one test pattern.

Simply, when executing the machine instruction code, the terminal needs to rely on a logic circuit in the terminal, that is, execute the machine instruction code based on the logic circuit. Therefore, when the at least one test pattern corresponding to the machine instruction code of the first task is determined, for a logic circuit used when the terminal executes the machine instruction code of the first task, fault detection may be implemented based on the at least one test pattern.

It may be understood that, in a process in which the terminal runs the first task, if a fault occurs in a logic circuit that needs to be used in the process of running the first task, when the terminal runs the first task, a safety risk may be generated due to the fault of the logic circuit. Therefore, the test pattern is executed based on the scheduling table corresponding to the first task, so that fault detection of a logic circuit that needs to be used can be implemented, and generation of a safety risk is avoided. For another logic circuit, because the current terminal does not execute a corresponding task, that is, another logic circuit does not need to be used, even if a fault occurs in this part of logic circuit, no safety risk is generated.

In a possible embodiment, the at least one test pattern in the first scheduling table is determined based on a first mapping relationship and at least one instruction type. The first mapping relationship includes a mapping relationship between an instruction type and a test pattern, the at least one instruction type is determined based on a second mapping relationship and a machine instruction code set of a target task, the second mapping relationship includes a mapping relationship between the machine instruction code and the instruction type, and the machine instruction code set includes a plurality of machine instruction codes. For example, the first test pattern may be determined based on the first mapping relationship and the at least one instruction type.

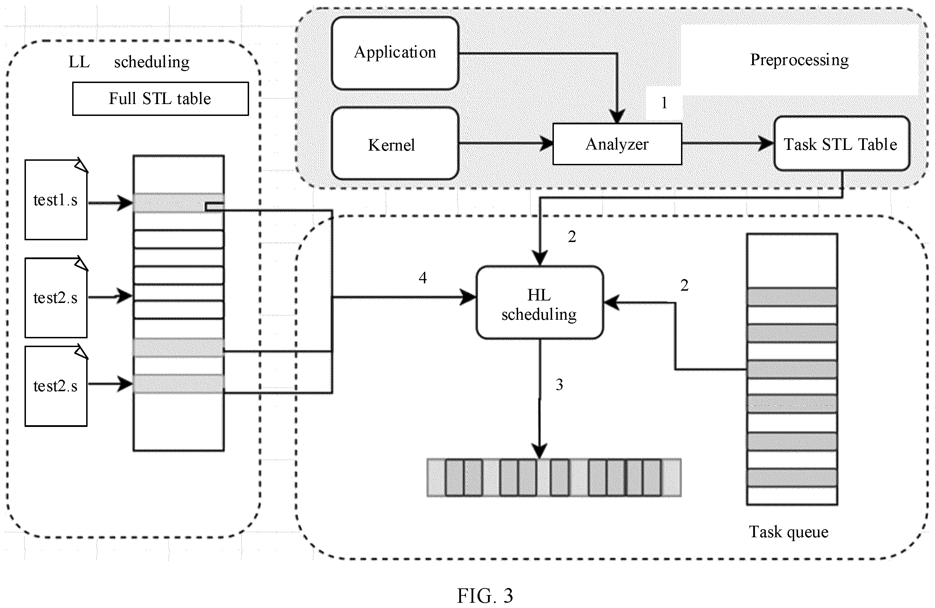

Referring to FIG. 3, in a preprocessing process, instruction scanning may be performed on tasks in a system running process, and a corresponding scheduling table is generated for each task (each scheduling table includes at least one test pattern). In an STL scheduling analysis process, an analyzer of an HL scheduler analyzes an SBIST test sequence in a current period based on task queue information, FDTI time, and a scheduling table of each task generated in a preprocessing phase. In an STL scheduling generation process, an analysis result passes through a generator, a to-be-scheduled STL test pattern set is generated, and in an LL scheduling process, the STL test set transferred by the HL is scheduled and run at a highest privilege layer through LL scheduling.

Step 202: Detect whether the first test pattern has been executed in the target FDTI.

In a possible embodiment, after the first scheduling table of the first task is obtained, whether the first test pattern has been executed in the target FDTI may be detected.

In this embodiment of this application, test pattern sets corresponding to different tasks in a same FDTI may overlap (that is, a union set of the two sets is not empty). In order to avoid repeated execution of a test pattern in an FDTI period, an executed test pattern in the FDTI is analyzed, and a proper scheduling set is generated.

In a possible embodiment, before the test pattern included in the first scheduling table is executed, whether the test pattern included in the first scheduling table has been executed in a current FDTI period needs to be detected. If the test pattern has been executed, execution of the test pattern may be directly skipped, or if the test pattern has not been executed, the test pattern may be executed.

The following describes how to detect whether the first test pattern has been executed in the target FDTI.

In a possible embodiment, a first identifier may be used to indicate whether the first test pattern has been executed in the target FDTI. When initialization for the FDTI is performed, the first identifier may indicate that the first test pattern has not been executed in the target FDTI, and after the first test pattern is executed in the FDTI for the first time, the first identifier may be modified, so that the first identifier may indicate that the first test pattern has been executed in the target FDTI.

For example, before the first task is executed, it may be determined, based on detecting that the first identifier corresponding to the first test pattern indicates that the first test pattern has not been executed in the target FDTI, that the first test pattern has not been executed in the target FDTI.

For example, the first identifier may be represented by a bit mask (for example, the bit mask may be STLMask). For example, when the bit STLMask corresponding to the first test pattern in the mask is 1, it indicates that the first test pattern has already been executed in the current FDTI period; when the bit STLMask corresponding to the first test pattern in the mask is 0, it indicates that the first test pattern has not been executed in the current FDTI period. When initialization for the FDTI is performed, the first identifier STLMask is set to 0, and a timer is enabled. A period of the timer is the FDTI. Each time the timer is triggered, the first identifier is reset to 0, and the timer is reset. For example, before the first task is executed, it may be determined, based on detecting that the first identifier STLMask corresponding to the first test pattern is 0, that the first test pattern has not been executed in the target FDTI.

In addition, a second identifier may further be used to indicate whether the first test pattern needs to be executed. The first test pattern is executed in the target FDTI only when the second identifier indicates that the first test pattern needs to be executed. The second identifier is associated with the first identifier. The second identifier indicates that the first test pattern needs to be executed only when the first identifier indicates that the first test pattern has not been executed in the target FDTI. The first identifier indicates that the first test pattern has been executed in the target FDTI, the second identifier indicates that the first test pattern does not need to be executed.

For example, before the first task is executed, it may be determined, based on detecting that the second identifier indicates that the first test pattern needs to be executed, that the first test pattern needs to be executed.

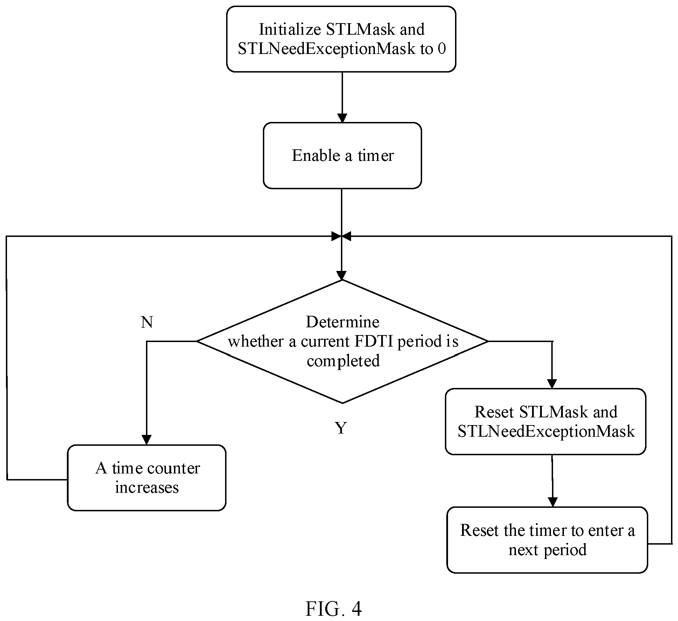

For example, referring to FIG. 4, the second identifier may be represented by a bit mask (for example, the bit mask may be STLNeedExcuteMask). When the bit STLNeedExcuteMask corresponding to the first test pattern in the mask is 1, it indicates that the first test pattern still needs to be executed in the current FDTI period; when the bit STLNeedExcuteMask corresponding to the first test pattern in the mask is 0, it indicates that the first test pattern does not need to be executed in the current FDTI period.

When the initialization for the FDTI is performed, the second identifier STLNeedExcuteMask is set to 0, and a timer is enabled. A period of the timer is FDTI. Each time the timer is triggered, the second identifier STLNeedExcuteMask is reset to 0, and the timer is reset. For example, before the first task is executed, it may be determined, based on detecting that the second identifier STLNeedExcuteMask corresponding to the first test pattern is 1, that the first test pattern needs to be executed.

Step 203: If it is detected that the first test pattern has not been executed in the target FDTI, execute the first test pattern in the target FDTI based on the first scheduling table, to detect the fault of the target logic circuit.

In this embodiment of this application, if it is detected that the first test pattern has not been executed in the target FDTI, the first test pattern may be executed in the target FDTI based on the first scheduling table; or if it is detected that the first test pattern has been executed in the target FDTI, execution of the first test pattern is skipped in the target FDTI. In other words, the first test pattern is executed only when the first test pattern needs to be executed for the first time in the target FDTI, and when the first test pattern has been executed in the target FDTI, the first test pattern is not executed in the target FDTI again.

In a possible embodiment, when the first test pattern needs to be executed in the target FDTI for the first time, the first test pattern may be executed, and the second task (the second task is different from the first task) further needs to be executed in the FDTI. In this case, a second scheduling table of the second task may be obtained, where the second scheduling table also includes the first test pattern. During task scheduling, execution of the first test pattern may be skipped in the target FDTI based on the fact that the first test pattern has been executed in the target FDTI. In this way, the first test pattern is executed only once in the FDTI, and is not repeatedly executed.

In a possible embodiment, after the first test pattern is executed in the target FDTI, the first identifier may be modified, to make the first identifier indicate that the first test pattern has been executed in the target FDTI. Similarly, after the first test pattern is executed in the target FDTI, the second identifier may be modified, to make the second identifier indicate that the first test pattern does not need to be executed. For example, execution of the first test pattern may be skipped in the target FDTI based on the fact that the second identifier indicates that the first test pattern does not need to be executed, so that the first test pattern is executed only once in the FDTI, and is not repeatedly executed.

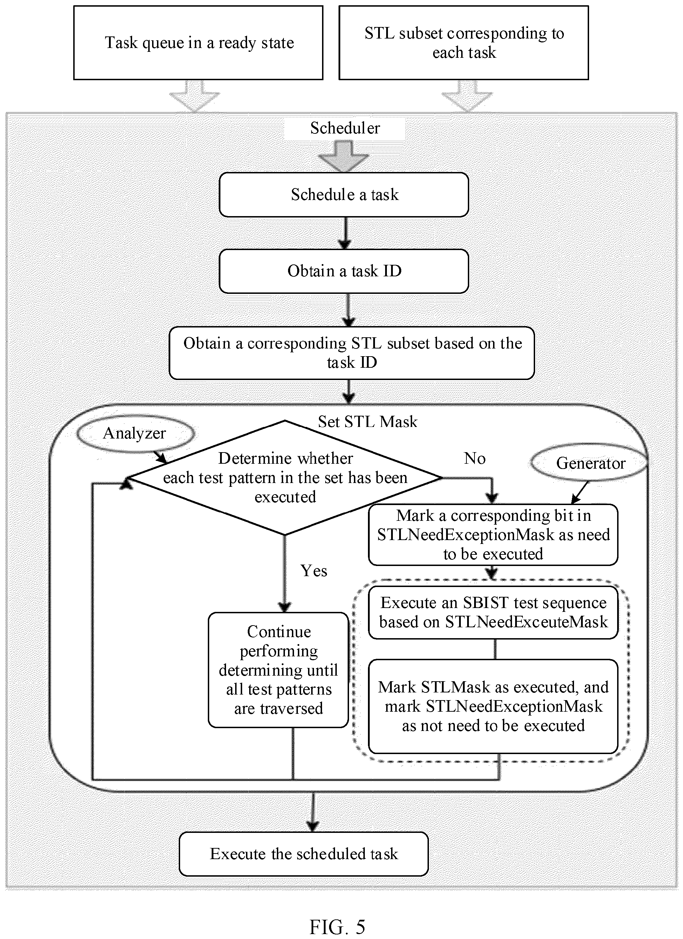

For example, referring to FIG. 5, in a non-deterministic scheduling scenario, a scheduler does not predict a task that needs to be executed in a next FDTI, and senses in real time a task that needs to be executed in the next FDTI only after entering the FDTI. Therefore, a priority preemption manner is set for an SBIST task. In the FDTI, before each common task (non-SBIST task) is executed, an STL subset (including at least one test pattern) corresponding to the task is executed in an uninterrupted manner. In this scenario, the scheduler may sense, in real time, a task that needs to be executed in the current FDTI, to sense the task. The scheduler schedules a task in a ready state from the task queue, obtains a task ID of the task, finds a corresponding STL subset, that is, a test pattern set, based on the task ID of the task, and determines, based on the STLMask, whether the test pattern in each STL subset is executed in a current FDTI period. If the test pattern has been executed, a next round of determining is performed; or if the test pattern has not been executed, a corresponding bit in STLNeedExcuteMask is set to 1, the test pattern is executed, and bits in STLMask and STLNeedExcuteMask corresponding to the executed test pattern are set to executed and not need to be executed until all test patterns are traversed. After an SBIST task of the currently scheduled task is to be executed, the scheduled task may continue to be executed. Other tasks in the task queue are executed in sequence.

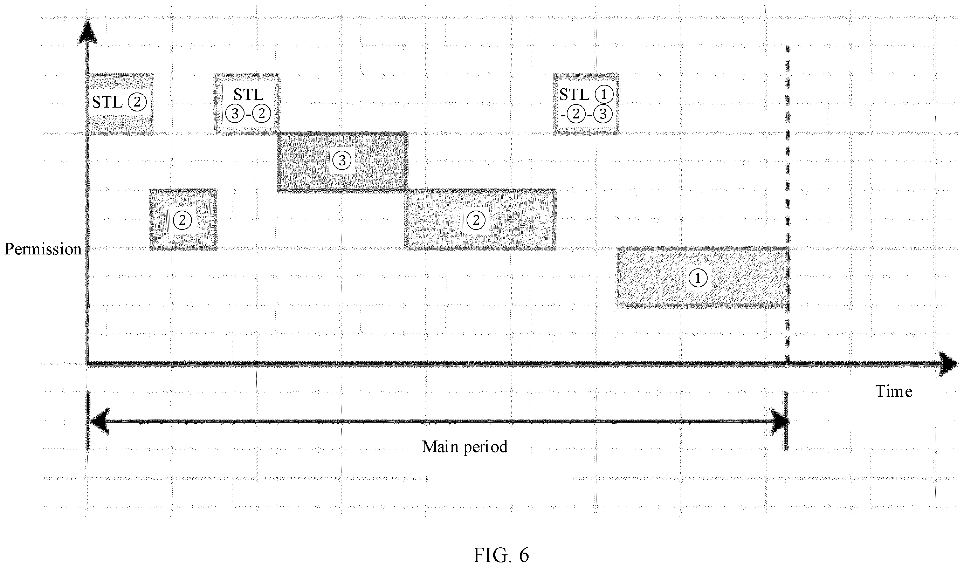

Referring to FIG. 6, a horizontal coordinate represents time, a vertical coordinate represents a priority of a task, and a block of each color represents a time slice in which a task runs in current time and occupies a CPU. An FDTI period starts from origin to a dotted line. In this period, when tasks 1, 2, and 3 are scheduled by the scheduler, SBSIT tasks corresponding to the tasks are first executed. An SBIST task runs an STL test pattern set related to the task. The SBIST task has a higher priority, and a test sequence cannot be interrupted. In FDTI scheduling time, a test pattern subset of each task needs to be unique. For example, before the task 3 is executed, a test pattern subset corresponding to the task 3 (other than a test pattern that is in the test pattern subset and that corresponds to the task 2) can be executed.

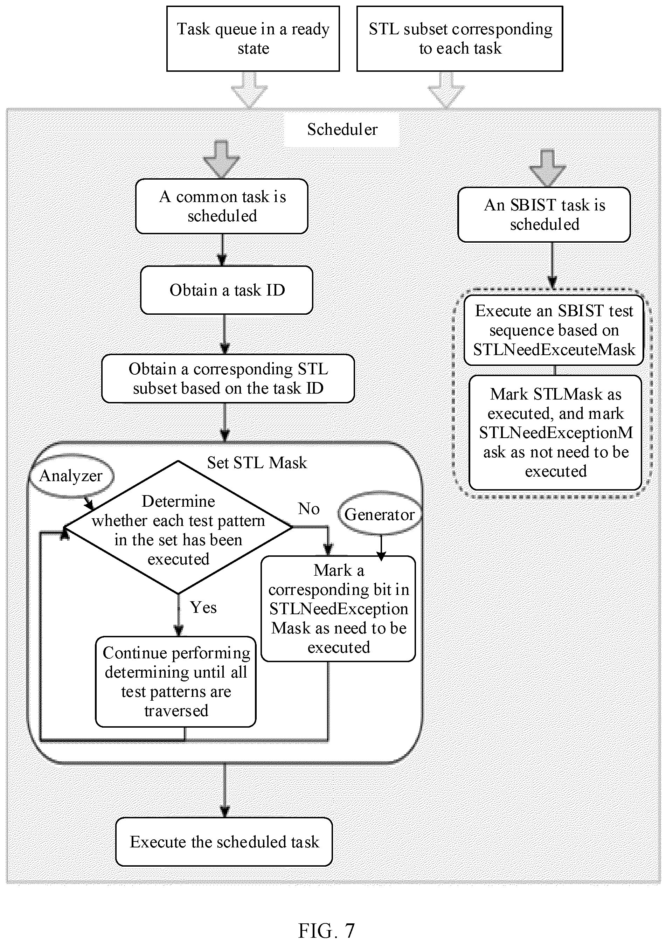

For example, referring to FIG. 7, in a deterministic scheduling scenario, a scheduler may predict a task that needs to be executed in a next FDTI. To ensure deterministic scheduling, worst case execution time (worst Case execution time, WCET) needs to be statically determined for most tasks, to determine a priority order. Therefore, in this scenario, a default high priority is not suitable for an SBIST task, and a deterministic scheduling algorithm needs to be adapted for the SBIST task, to perform deterministic scheduling arrangement. In this scenario, the scheduler may sense, before the current FDTI, a task that needs to be executed in the FDTI, to sense the task. The scheduler may schedule a task in the ready state from the task queue. If the task is a common task, the common task is executed. Specifically, a task ID of the task may be obtained, a corresponding STL set, that is, a test pattern set, is found based on the task ID of the task, and it is determined whether the current FDTI times out. If the current FDTI does not time out, for a test pattern in each STL subset, whether the test pattern has been executed in the current FDTI period is determined based on the STLMask. If the test pattern has been executed, a next round of determining is performed until all test patterns are traversed. If the test pattern has not been executed, a corresponding bit in STLNeedExcuteMask is set to 1. If the FDTI times out, all bits in STLmask are reset to 0. If the scheduled task is an SBIST task, an SBIST test sequence is executed based on STLNeedExcuteMask. After the execution, a corresponding bit in STLNeedExcuteMask is set to 0, and a corresponding bit in STLmask is set to 1.

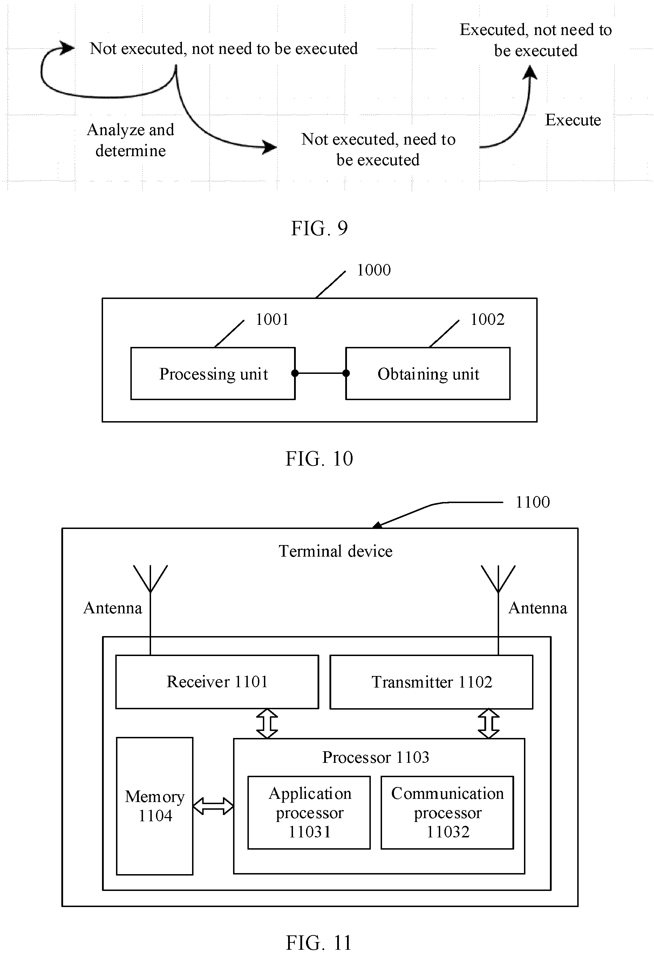

In this embodiment of this application, referring to FIG. 9, the test pattern in the SBIST task may be classified into three states: (not executed, not need to be executed), (not executed, need to be executed), and (executed, not need to be executed), and an initial state is (not executed, not need to be executed). After the analyzer is used, a test pattern status remains unchanged or (is not executed, needs to be executed). After the test pattern is executed, a status of the (not executed, need to be executed) is changed to (executed, not need to be executed).

As shown in the following table, compared with SBIST scheduling in the conventional technology, the method in this embodiment of this application shortens SBIST test sequence running time in the present invention by about 75% compared with that in the conventional technology.

| | Conventional technology | Embodiments of this application |
|---|---|---|
| STL execution time | 4.205 ms | 1.005 ms |

Embodiments of this application provide a fault detection method, including: obtaining a first scheduling table of a first task, where the first scheduling table includes a first test pattern, the first test pattern is used to detect a fault of a target logic circuit, the target logic circuit is a logic circuit used to execute the first task, and the first task is executed in a target fault detection time interval FDTI; detecting whether the first test pattern has been executed in the target FDTI; and if it is detected that the first test pattern has not been executed in the target FDTI, executing the first test pattern in the target FDTI based on the first scheduling table, to detect the fault of the target logic circuit. The first test pattern is executed only when the first test pattern needs to be executed for the first time in the target FDTI. However, when the first test pattern has been executed in the target FDTI, the first test pattern is not executed in the target FDTI again, so that a same test pattern is executed only once in the FDTI, and is not repeatedly executed. This reduces load of a test pattern in an STL on a processor, reduces time spent by the processor in detecting a fault, and improves operating efficiency of the processor.

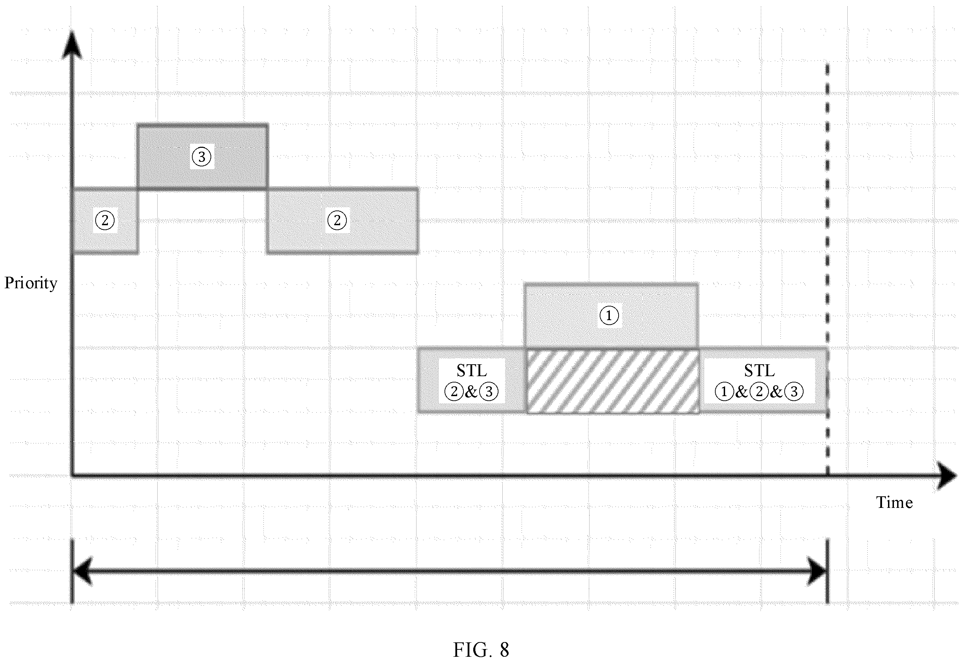

Based on embodiments corresponding to FIG. 1a to FIG. 9, to better implement the foregoing solutions in embodiments of this application, the following further provides related devices configured to implement the foregoing solutions. Specifically, FIG. 10 is a schematic diagram of a structure of a terminal 1000 according to an embodiment of this application. The terminal 1000 includes a processing unit 1001 and an obtaining unit 1002. The obtaining unit 1002 is configured to obtain a first scheduling table of a first task, where the first scheduling table includes a first test pattern, the first test pattern is used to detect a fault of a target logic circuit, the target logic circuit is a logic circuit used to execute the first task, and the first task is executed in a target fault detection time interval FDTI. The processing unit 1001 is configured to detect whether the first test pattern has been executed in the target FDTI; and
if it is detected that the first test pattern has not been executed in the target FDTI, execute the first test pattern in the target FDTI to detect the fault of the target logic circuit.

In some possible implementations, the processing unit 1001 is further configured to: if it is detected that the first test pattern has been executed in the target FDTI, skip execution of the first test pattern in the target FDTI.

In some possible implementations, the obtaining unit 1002 is further configured to obtain a second scheduling table of a second task after the first test pattern is executed in the target FDTI, where the second scheduling table includes the first test pattern, the target logic circuit is a logic circuit configured to execute the second task, and the second task is executed in the target fault detection time interval FDTI.

The processing unit 1001 is further configured to skip execution of the first test pattern in the target FDTI when the first test pattern has been executed in the target FDTI.

In some possible implementations, the obtaining unit 1002 is further configured to obtain a first identifier corresponding to the first test pattern, where the first identifier is used to indicate whether the first test pattern has been executed in the target FDTI.

In some possible implementations, the processing unit 1001 is further configured to detect that the first identifier corresponding to the first test pattern indicates that the first test pattern has not been executed in the target FDTI; and
modify the first identifier after the first test pattern is executed in the target FDTI, so that the first identifier indicates that the first test pattern has been executed in the target FDTI.

In some possible implementations, the processing unit 1001 is further configured to: obtain a second identifier corresponding to the first test pattern after it is detected that the first test pattern has not been executed in the target FDTI, where the second identifier is used to indicate whether the first test pattern needs to be executed; and
before the first test pattern is executed in the target FDTI, detect that the second identifier indicates that the first test pattern needs to be executed.

In some possible implementations, the processing unit 1001 is further configured to modify the second identifier after the first test pattern is executed in the target FDTI, so that the second identifier indicates that the first test pattern does not need to be executed.

In some possible implementations, a target task includes a process or a thread.

In embodiments of this application, the first test pattern is executed only when the first test pattern needs to be executed for the first time in the target FDTI. However, when the first test pattern has been executed in the target FDTI, the first test pattern is not executed in the target FDTI again, so that a same test pattern is executed only once in the FDTI, and is not repeatedly executed. This reduces load of a test pattern in an STL on a processor, reduces time spent by the processor in detecting a fault, and improves operating efficiency of the processor.

The following describes a terminal device provided in an embodiment of this application. The terminal device may be the information recommendation device in FIG. 11. FIG. 11 is a schematic diagram of a structure of a terminal device according to an embodiment of this application. The terminal device 1100 may be specifically a virtual reality VR device, a mobile phone, a tablet computer, a notebook computer, an intelligent wearable device, or the like. This is not limited herein. Specifically, the terminal device 1100 includes a receiver 1101, a transmitter 1102, a processor 1103, and a memory 1104 (there may be one or more processors 1103 in the terminal device 1100, and one processor is used as an example in FIG. 11.) The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data to the processor 1103. A part of the memory 1104 may further include a non-volatile random access memory (non-volatile random access memory, NVRAM). The memory 1104 stores a processor and operation instructions, an executable module or a data structure, a subnet thereof, or an expanded set thereof. The operation instructions may include various operation instructions to implement various operations.

The processor 1103 controls an operation of the terminal device. In a specific application, components of the terminal device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1103, or implemented by the processor 1103. The processor 1103 may be an integrated circuit chip and has a signal processing capability. In an implementation process, each step of the foregoing method may be completed by using an integrated logic circuit of hardware in the processor 1103 or an instruction in a form of software. The processor 1103 may be a general-purpose processor, a digital signal processor (digital signal processor, DSP), a microprocessor, or a microcontroller. The processor 1103 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 1103 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1104, and the processor 1103 reads information in the memory 1104 and completes the steps in the foregoing methods in combination with hardware of the processor. Specifically, the processor 1103 may read information in the memory 1104, and complete, in combination with hardware of the processor 1103, steps related to data processing in step 201 to step 203 in the foregoing embodiment.

The receiver 1101 may be configured to receive input digital or character information, and generate signal input related to a related setting and function control of the terminal device. The transmitter 1102 may be configured to output digital or character information through a first interface. The transmitter 1102 may be further configured to send instructions to a disk group through the first interface, to modify data in the disk group.

An embodiment of this application further provides a computer program product. When the computer program product runs on a computer, the computer is enabled to perform the steps of the fault detection method described in the embodiment corresponding to FIG. 2 in the foregoing embodiment.

An embodiment of this application further provides a computer-readable storage medium. The computer-readable storage medium stores a program for signal processing. When the program is run on a computer, the computer is enabled to perform the steps in the image processing method in the foregoing method embodiments.

The image processing apparatus provided in this embodiment of this application may be a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit, so that a chip in an execution device performs the data processing method described in the embodiments, or a chip in a training device performs the data processing method described in the embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it can be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

## Claims

1. A fault detection method, comprising:
obtaining a first scheduling table of a first task, wherein the first scheduling table comprises a first test pattern, the first test pattern is used to detect a fault of a target logic circuit, the target logic circuit is a logic circuit configured to execute the first task, and the first task is executed in a target fault detection time interval FDTI;
detecting whether the first test pattern has been executed in the target FDTI; and
if it is detected that the first test pattern has not been executed in the target FDTI, executing the first test pattern in the target FDTI based on the first scheduling table.

2. The fault detection method according to claim 1, further comprising:
if it is detected that the first test pattern has been executed in the target FDTI, skipping execution of the first test pattern in the target FDTI.

3. The fault detection method according to claim 1 or 2, wherein after the executing the first test pattern in the target FDTI, the method further comprises:
obtaining a second scheduling table of a second task, wherein the second scheduling table comprises the first test pattern, the target logic circuit is a logic circuit configured to execute the second task, and the second task is executed in the target fault detection time interval FDTI; and
skipping execution of the first test pattern in the target FDTI based on the fact that the first test pattern has been executed in the target FDTI.

4. The fault detection method according to any one of claims 1 to 3, wherein the detecting whether the first test pattern has been executed in the target FDTI comprises:
obtaining a first identifier corresponding to the first test pattern, wherein the first identifier is used to indicate whether the first test pattern has been executed in the target FDTI.

5. The fault detection method according to claim 4, wherein the detecting that the first test pattern has not been executed in the target FDTI comprises:
detecting that the first identifier corresponding to the first test pattern indicates that the first test pattern has not been executed in the target FDTI; and
after the executing the first test pattern in the target FDTI, the method further comprises:
modifying the first identifier, to make the first identifier indicate that the first test pattern has been executed in the target FDTI.

6. The fault detection method according to any one of claims 1 to 5, wherein after the detecting that the first test pattern has not been executed in the target FDTI, the method further comprises:
obtaining a second identifier corresponding to the first test pattern, wherein the second identifier is used to indicate whether the first test pattern needs to be executed; and
before the executing the first test pattern in the target FDTI, the method further comprises:
detecting that the second identifier indicates that the first test pattern needs to be executed.

7. The fault detection method according to claim 6, wherein after the executing the first test pattern in the target FDTI, the method further comprises:
modifying the second identifier, to make the second identifier indicate that the first test pattern does not need to be executed.

8. The fault detection method according to any one of claims 1 to 7, wherein the target task comprises a process or a thread.

9. A terminal, comprising a processor, wherein the processor is configured to:
obtain a first scheduling table of a first task, wherein the first scheduling table comprises a first test pattern, the first test pattern is used to detect a fault of a target logic circuit, the target logic circuit is a logic circuit configured to execute the first task, and the first task is executed in a target fault detection time interval FDTI;
detect whether the first test pattern has been executed in the target FDTI; and
if it is detected that the first test pattern has not been executed in the target FDTI, execute the first test pattern in the target FDTI.

10. The terminal according to claim 9, wherein the processor is further configured to:
if it is detected that the first test pattern has been executed in the target FDTI, skip execution of the first test pattern in the target FDTI.

11. The terminal according to claim 9 or 10, wherein the processor is further configured to:
obtain a second scheduling table of a second task after the first test pattern is executed in the target FDTI, wherein the second scheduling table comprises the first test pattern, the target logic circuit is a logic circuit configured to execute the second task, and the second task is executed in the target fault detection time interval FDTI; and
skip execution of the first test pattern in the target FDTI based on the fact that the first test pattern has been executed in the target FDTI.

12. The terminal according to any one of claims 9 to 11, wherein the processor is specifically configured to:
obtain a first identifier corresponding to the first test pattern, wherein the first identifier is used to indicate whether the first test pattern has been executed in the target FDTI.

13. The terminal according to claim 12, wherein the processor is specifically configured to:
detect that the first identifier corresponding to the first test pattern indicates that the first test pattern has not been executed in the target FDTI; and
modify the first identifier after the first test pattern is executed in the target FDTI, to make the first identifier indicate that the first test pattern has been executed in the target FDTI.

14. The terminal according to any one of claims 9 to 13, wherein the processor is further configured to:
obtain a second identifier corresponding to the first test pattern after it is detected that the first test pattern has not been executed in the target FDTI, wherein the second identifier is used to indicate whether the first test pattern needs to be executed; and
before the first test pattern is executed in the target FDTI, detect that the second identifier indicates that the first test pattern needs to be executed.

15. The terminal according to claim 14, wherein the processor is further configured to:
modify the second identifier after the first test pattern is executed in the target FDTI, to make the second identifier indicate that the first test pattern does not need to be executed.

16. The terminal according to any one of claims 9 to 15, wherein the target task comprises a process or a thread.

17. A computer-readable storage medium, comprising computer-readable instructions, wherein when the computer-readable instructions are run on a computer, the computer is enabled to perform the method according to any one of claims 1 to 8.

18. A computer program product, comprising computer-readable instructions, wherein when the computer-readable instructions are run on a computer, the computer is enabled to perform the method according to any one of claims 1 to 8.
